# EUROPEAN PATENT SPECIFICATION

(11) **EP 4 220 836 B1**
(45) Date of publication and mention of the grant of the patent: **23.07.2025**
(21) Application number: 23153727.5
(22) Date of filing: 27.01.2023
(51) Int. Cl.: H01M 50/284, H01M 50/287, H01M 50/105, H01M 10/42

(54) **SECONDARY BATTERY**
SEKUNDÄRBATTERIE
BATTERIE SECONDAIRE

(30) Priority: 27.01.2022 KR 20220012602
(43) Date of publication of application: 02.08.2023
(60) Divisional application: 25183844.7
(73) Proprietor: Samsung SDI Co., Ltd., Yongin-si, Gyeonggi-do 17084 (KR)
(72) Inventor: LEE, Ho Geun, 17084 Yongin-si (KR)
(74) Representative: Walaski, Jan Filip

(56) References cited:
- EP-A1- 3 736 900
- US-A1- 2014 037 994
- US-A1- 2018 242 454

## Description

### BACKGROUND

### 1. Field

The present disclosure relates to a secondary battery which prevents occurrence of pattern short circuit during laser welding of a protection circuit board.

### 2. Description of the Related Art

In general, unlike a primary battery that cannot be charged, a secondary battery can be charged and discharged. A secondary battery may be used in the form of a single battery or in the form of a battery module in which multiple batteries are connected and bundled into a single unit, depending on the type of external device applied.

As secondary batteries are used in large vehicles such as hybrid vehicles beyond being used as power sources of small electronic devices such as mobile phones and notebook computers, demand for high-output and high-capacity batteries is rapidly increasing.

Meanwhile, in a secondary battery, in order to control charging and discharging operations, a protection circuit board is coupled to a battery cell, and the battery cell and the protection circuit board are generally bonded through welding.

The above information disclosed in this Background section is only for enhancement of understanding of the background of the invention and therefore it may contain information that does not constitute prior art.

EP 3 736 900 A1 discloses a tab plate of a battery pack comprising a through hole configured to heat an electrode tab being welded to the tab plate in advance.

US 2018/242454 A1 discloses a circuit board comprising a through hole configured to receive an end of a metal plate soldered to a connection portion of the circuit board.

US 2014/037994 A1 discloses a protective circuit module configured such that a cut out portion is not necessary for a battery cell tab to be welded to the protective circuit module.

### SUMMARY

The present disclosure provides a secondary battery which prevents occurrence of pattern short circuit during laser welding of a protection circuit board.

According to the invention, there is provided a secondary battery according to claim 1 and a method of manufacturing a secondary battery according to claim 9.

### BRIEF DESCRIPTION OF DRAWINGS

FIG. 1A is a perspective view illustrating a secondary battery according to an embodiment of the present disclosure.
FIG. 1B is an exploded perspective view illustrating a process of coupling a battery cell and a protection circuit board in a secondary battery according to an embodiment of the present disclosure.
FIG. 2 is a plan view illustrating a protection circuit board used in a secondary battery according to an embodiment of the present disclosure.
FIG. 3 is an enlarged view of portion A of FIG. 2.
FIG. 4 is an enlarged view of a conductive pattern of the protection circuit board in FIG. 3.

### DETAILED DESCRIPTION

Examples of the present invention are provided to more completely explain the present invention to those skilled in the art, and the following examples may be modified in various other forms. The present invention, however, may be embodied in many different forms and should not be construed as being limited to the example (or exemplary) embodiments set forth herein. Rather, these example embodiments are provided so that this disclosure will be thorough and complete and will convey the aspects and features of the present invention to those skilled in the art.

In addition, in the accompanying drawings, sizes or thicknesses of various components are exaggerated for brevity and clarity. Like numbers refer to like elements throughout. As used herein, the term "and/or" includes any and all combinations of one or more of the associated listed items. In addition, it will be understood that when an element A is referred to as being "connected to" an element B, the element A can be directly connected to the element B or an intervening element C may be present therebetween such that the element A and the element B are indirectly connected to each other.

The terminology used herein is for the purpose of describing particular embodiments only and is not intended to be limiting of the disclosure. As used herein, the singular forms are intended to include the plural forms as well, unless the context clearly indicates otherwise. It will be further understood that the terms that the terms "comprise or include" and/or "comprising or including," when used in this specification, specify the presence of stated features, numbers, steps, operations, elements, and/or components, but do not preclude the presence or addition of one or more other features, numbers, steps, operations, elements, components, and/or groups thereof.

It will be understood that, although the terms first, second, etc. may be used herein to describe various members, elements, regions, layers and/or sections, these members, elements, regions, layers and/or sections should not be limited by these terms. These terms are only used to distinguish one member, element, region, layer and/or section from another. Thus, for example, a first member, a first element, a first region, a first layer and/or a first section discussed below could be termed a second member, a second element, a second region, a second layer and/or a second section without departing from the teachings of the present invention.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the element or feature in the figures is turned over, elements described as "below" or "beneath" other elements or features would then be oriented "on" or "above" the other elements or features. Thus, the exemplary term "below" can encompass both an orientation of above and below.

Hereinafter, prior to describing an electrode assembly according to an embodiment of the present disclosure with reference to the accompanying drawings, a general electrode assembly structure will be first described.

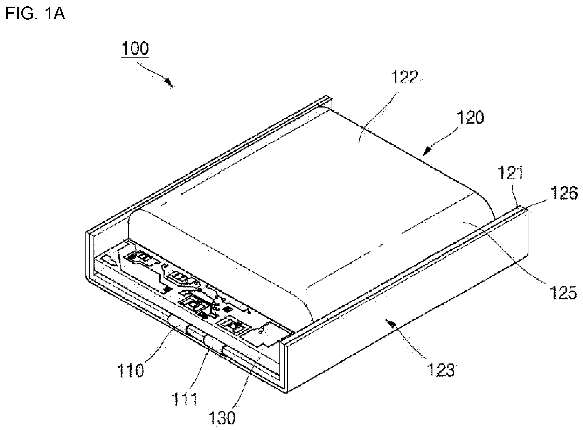

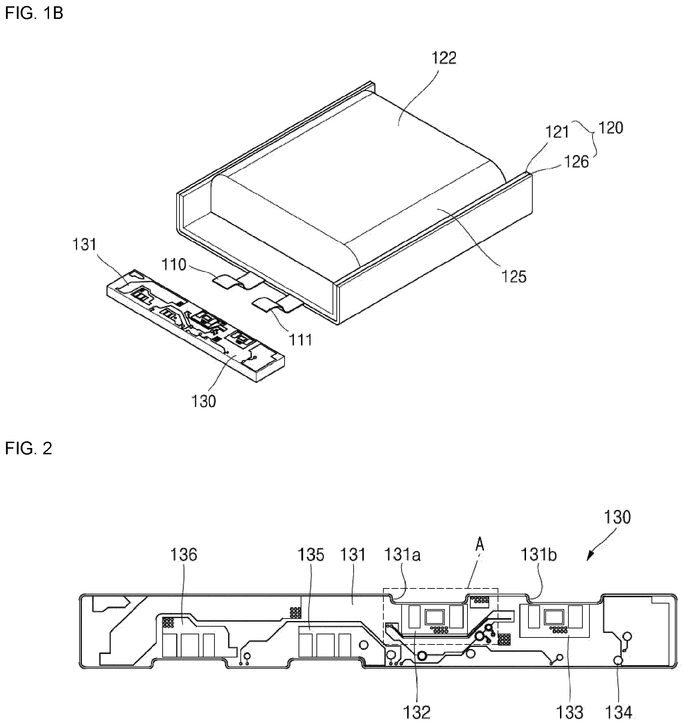

FIG. 1A is a perspective view illustrating a secondary battery according to an embodiment of the present disclosure. FIG. 1B is an exploded perspective view illustrating a process of coupling a battery cell and a protection circuit board in a secondary battery according to an embodiment of the present disclosure.

Referring first to FIG. 1A, the secondary battery 100 according to the present disclosure may include lead tabs 110 and 111 extending from an electrode assembly, a case 120 containing an electrode assembly, and a protection circuit board 130.

First, a built-in electrode assembly (not shown) may have a structure in which a first electrode plate formed by applying a first active material to both surfaces of a substrate, a separator, and a second electrode plate formed by applying a second active material to both surfaces of a substrate, are sequentially stacked. Here, the separator is inserted between the first electrode plate and the second electrode plate to prevent a short circuit from occurring between the electrode plates. For example, the first electrode plate may be composed of a positive electrode plate and the second electrode plate may be composed of a negative electrode plate, but polarities can also be interchanged.

Meanwhile, a first lead tab 110 and a second lead tab 111 may be coupled to one-side ends (first ends) of the first electrode plate and the second electrode plate, respectively, to be electrically connected to external electrode terminals. In addition, an insulating tape may be further formed on a portion where each of the first lead tab 110 and the second lead tab 111 is coupled to the case 120.

The case 120 may be in the form of a pouch as shown, or may be a can-type case used for a prismatic battery or the like. Hereinafter, for convenience, the case 120 will be described as a pouch type.

The case 120 may include, with respect to a bent region, a first region in which the electrode assembly 100 is accommodated through an inner groove, and a second region that is folded around a boundary in contact with the first region to seal the first region.

Here, the groove in the first region may be formed to have a depth substantially corresponding to a thickness of the electrode assembly. Therefore, when the electrode assembly is accommodated in the first region, the first lead tab 110 and the second lead tab 111 may be exposed through the boundary of the first region.

In addition, in this state, the second region is folded so that the second region seals the first region, and only the first lead tab 110 and the second lead tab 111 may extend and be exposed through a region between the first region and the second region.

Referring to FIG. 1B together with FIG. 1A, the protection circuit board 130 may be electrically connected to the exposed first and second lead tabs 110 and 111. Electrical patterns for such an electrical connection may be formed on the surface of the protection circuit board 130 and may be coupled to the first lead tab 110 and the second lead tab 111 through laser welding, respectively. In addition, when excessive laser output is generated during this welding process, damage is applied to the protection circuit board 130, and accordingly, there has been a concern that short circuits between patterns may occur, and in the present disclosure, such short circuits can be prevented by varying patterns as will be described later.

In addition, after being welded to the first lead tab 110 and the second lead tab 111 in such a state as shown in FIG. 1B, the protection circuit board 130 may be folded upward through about 180 degrees and positioned at the front end of the case 120 as shown in FIG. 1A. Circuit components, such as a positive temperature element (PTC), may be separately further coupled to a top portion of the protection circuit board 130, and terminals required when charging and discharging the battery cell 110 with the outside may be further coupled.

Hereinafter, a configuration of a protection circuit board used in a secondary battery according to an embodiment of the present disclosure will be described in detail.

FIG. 2 is a plan view illustrating a protection circuit board used in a secondary battery according to an embodiment of the present disclosure.

Referring to FIG. 2, the protection circuit board 130 used in the secondary battery according to the embodiment of the present disclosure may include a first conductive pattern 132 and a second conductive pattern 133 in which a first lead tab 110 and a second lead tab 111 are welded to at least one side of a substrate body 131. In addition, the conductive patterns 132 and 133 of the substrate 130 may be connected to a desired path inside the protection circuit board 130 through wiring 134. In addition, grooves 131a and 131b formed by removing portions of a side of the substrate body 131 may be further formed in regions in which the lead tabs 110 and 111 of the battery cell are coupled to the first conductive pattern 132 and the second conductive pattern 133. When the lead tabs 110 and 111 are later welded to the first conductive pattern 132 and the second conductive pattern 133, respectively, or when the lead tabs 110 and 111 are later folded, such grooves 131a and 131b may allow the operations to be smoothly performed.

In addition, a third conductive pattern 135 and a fourth conductive pattern 136 may be further formed on the other side of the substrate body 131. The third conductive pattern 135 and the fourth conductive pattern 136 may be formed to be symmetrical with the first conductive pattern 132 and the second conductive pattern 133. Depending on the design, the third conductive pattern 135 and the fourth conductive pattern 136 may be configured such that a lead tab of a second battery cell is connected when a plurality of battery cells are coupled, or a PTC device, etc. may be used for the coupling purpose. In addition, since the second conductive pattern 133 to the fourth conductive pattern 136 may have the same configuration as the first conductive pattern 132, the first conductive pattern 132 will be mainly described below.

Hereinafter, the structure of the first conductive pattern 132 will be described in detail.

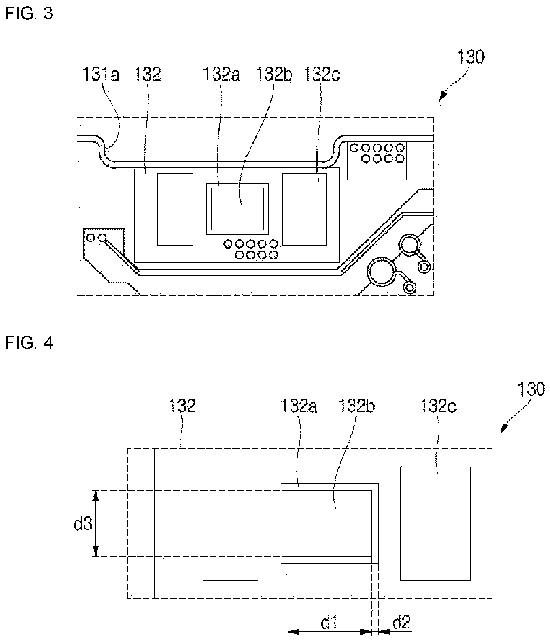

FIG. 3 is an enlarged view of portion A of FIG. 2.

As shown in FIG. 3, the first conductive pattern 132 includes a cell seating region 132b (also referred to as a tab seating region) inside a blank region 132a formed by removing the conductive portion around the cell seating region 132b. The blank region 132a and the cell seating region 132b are together referred to as a pad. Removing the conductive portion around the cell seating region 132b is also referred to as emptying a portion of the pad. The first lead tab 110 or the second lead tab 111 may be later seated in the cell seating region 132b, and laser welding may be later performed. However, the blank region 132a formed by removing the conductive portion is provided along the edge of the cell seating region 132b, and in the cell seating region 132b, the blank region 132a may electrically and physically separate the conductive cell seating region 132b from other regions. In addition, an insulating layer, such as an insulating tape, may be additionally provided on the upper surface of the blank region 132a, which may be helpful for electrical independence (insulation) in the blank region 132a.

Through this blank region 132a, even when the output of the laser used in the laser welding of the lead tabs 110 and 111 is excessively high, due to the presence of the blank region 132a, short circuit with other regions of the first conductive pattern 132 may be prevented. In addition, wiring separate from other regions of the first conductive pattern 132 is connected to the cell seating region 132b to form a required electric path within the protection circuit board 130. Since such wiring is connected through a via formed in the vertical direction of the protection circuit board 130 formed in a multilayer structure, the blank region 132a and the wiring are formed on different layers within the substrate 130, and thus do not interfere with each other.

In addition, a peripheral pattern region 132c in which other devices such as other PTCs can be further formed may be further formed outside the blank region 132a. However, as described above, through the blank region 132a, the peripheral pattern region 132c may be electrically and physically independent of the cell seating region 132b.

Hereinafter, detailed numerical values of the conductive pattern 132 will be described in detail.

FIG. 4 is an enlarged view of a conductive pattern of the protection circuit board in FIG. 3.

Referring to FIG. 4, in the first conductive pattern 132, the width d1 and height d3 of the cell seating region 132b and the width d2 of the blank region 132a are shown.

Here, the cell seating region 132b may have a width d1 of 2.3 mm to 2.5 mm. The width d1 of the cell seating region 132b may be set to be equal to or a slight margin greater than the width of the lead tab 110, 111, and welding may be easily performed in a state in which the lead tabs 110 and 111 are seated.

In addition, the cell seating region 132b may have a height d3 of 1.8 mm to 2.0 mm. The height d3 is for easily performing laser welding, and if the height d3 is 1.8 mm or more, a worker can easily perform welding and the bonding force according to welding can be maintained. If the height d3 is 2.0 mm or less, a wiring pattern may be advantageously set within a limited area of the protection circuit board 130.

In addition, the blank region 132a may have a width d2 of 0.2 mm to 0.4 mm. The blank region 132a may be formed at the edge of the cell seating region 132b with the same width d2, and if the width d2 of the blank region 132a is 0.2 mm or more, electrical independence of the cell seating region 132b can be stably achieved. In addition, if the width d2 of the blank region 132a is 0.4 mm or less, the required area of the cell seating region 132b may be secured within the first conductive region 132.

In this way, in the secondary battery according to an embodiment of the present disclosure, by forming the blank region 132a formed by removing a pattern around the edge of the cell seating region 132b where the lead tabs 110 and 111 of the battery cell are welded to the protection circuit board 130, it is possible to prevent a short circuit from occurring with other regions outside the cell seating region 132b even when the laser output is excessive.

As described above, in the secondary battery according to an embodiment of the present disclosure, by forming a blank region formed by blanking a pattern on the edge of the cell seating region where the lead tab of the battery cell is welded to a protection circuit board, it is possible to prevent a short circuit with other regions outside the cell seating region even when the laser output is excessive.

In other words, according to the invention, a secondary battery comprises a case housing an electrode assembly, lead tabs extending from the electrode assembly and connected to a protection circuit board, wherein the protection circuit board comprises a pad that comprises a conductive pattern 132 and a tab seating region 132b on the pad on which one of the electrode tabs is seated so that it can be laser welded to the tab seating region, wherein the tab seating region is surrounded by a non-conductive portion 132a to electrically isolate the tab seating region from the rest of the conductive pattern on the pad.

While the foregoing embodiment is only one embodiment for carrying out the present disclosure, it will be understood by a person skilled in the art that various changes in form and details may be made therein without departing from the scope of the present invention as defined by the following claims.

## Claims

1. A secondary battery comprising:
a case (120) that accommodates an electrode assembly, the electrode assembly comprising first and second electrode plates;
lead tabs (110, 111) connected to the first electrode plates and the second electrode plates, respectively, and protruding to the outside of the case (120); and
a protection circuit board (130) electrically connected to the lead tabs (110, 111),
wherein the protection circuit board (130) comprises a conductive pattern (132) and a conductive cell seating region (132b) on which one of the lead tabs (110, 111) is seated,
wherein the cell seating region (132b) is entirely surrounded by a non-conductive blank region (132a), the blank region being between the cell seating region (132b) and the conductive pattern (132);
wherein the blank region electrically isolates the cell seating region (132b) from the conductive pattern (132).

2. The secondary battery of claim 1, wherein the cell seating region (132b) and the lead tabs (110, 111) are laser welded.

3. The secondary battery of any one of the preceding claims, wherein the cell seating region (132b) has a width of 2.3 mm to 2.5 mm.

4. The secondary battery of any one of the preceding claims, wherein the cell seating region (132b) has a height of 1.8 mm to 2.0 mm.

5. The secondary battery of any one of the preceding claims, wherein the blank region (132b) has a width of 0.2 mm to 0.4 mm.

6. The secondary battery of any one of the preceding claims, further comprising an insulating layer formed on an upper surface of the blank region (132a).

7. The secondary battery of claim 6, wherein the insulating layer comprises insulating tape.

8. The secondary battery of any one of the preceding claims, wherein the electrode assembly includes a plurality of first electrode plates coated with a first active material, a plurality of second electrode plates coated with a second active material, and a separator positioned between each of the first electrode plates and each of the second electrode plates.

9. A method of manufacturing a secondary battery, comprising:
providing a case (120) that houses an electrode assembly that comprises first and second electrode plates and lead tabs (110, 111) connected to the first electrode plates and the second electrode plates, respectively, and protruding to the outside of the case (120);
providing a protection circuit board (130) that comprises a conductive pattern (132) including a conductive cell seating region (132b) on which one of the lead tabs (110, 111) is seated;
removing a portion of the conductive pattern (132) along each edge of the cell seating region (132b) to form a non-conductive blank region (132a) entirely surrounding the edges of the cell seating region (132b), the blank region (132a) electrically isolating the cell seating region (132b) from the conductive pattern (132).

10. The method of claim 9, comprising laser welding the lead tab (110, 111) to the cell seating region (132b).

## Patentansprüche

1. Sekundärbatterie, umfassend:
ein Gehäuse (120), das eine Elektrodenbaugruppe aufnimmt, wobei die Elektrodenbaugruppe erste und zweite Elektrodenplatten umfasst;
Leitfahnen (110, 111), die mit den ersten Elektrodenplatten bzw. den zweiten Elektrodenplatten verbunden sind und zu der Außenseite des Gehäuses (120) vorstehen; und
eine Schutzleiterplatte (130), die elektrisch mit den Leitfahnen (110, 111) verbunden ist,
wobei die Schutzleiterplatte (130) ein leitfähiges Muster (132) und eine leitfähige Zellsitzregion (132b) umfasst, auf der eine der Leitfahnen (110, 111) sitzt,
wobei die Zellsitzregion (132b) vollständig durch eine nicht leitfähige Leerregion (132a) umgeben ist, wobei sich die Leerregion zwischen der Zellsitzregion (132b) und dem leitfähigen Muster (132) befindet;
wobei die Leerregion die Zellsitzregion (132b) elektrisch von dem leitfähigen Muster (132) isoliert.

2. Sekundärbatterie nach Anspruch 1, wobei die Zellsitzregion (132b) und die Leitfahnen (110, 111) laserverschweißt sind.

3. Sekundärbatterie nach einem der vorhergehenden Ansprüche, wobei die Zellsitzregion (132b) eine Breite von 2,3 mm bis 2,5 mm aufweist.

4. Sekundärbatterie nach einem der vorhergehenden Ansprüche, wobei die Zellsitzregion (132b) eine Höhe von 1,8 mm bis 2,0 mm aufweist.

5. Sekundärbatterie nach einem der vorhergehenden Ansprüche, wobei die Leerregion (132b) eine Breite von 0,2 mm bis 0,4 mm aufweist.

6. Sekundärbatterie nach einem der vorhergehenden Ansprüche, ferner umfassend eine Isolierschicht, die auf einer oberen Oberfläche der Leerregion (132a) ausgebildet ist.

7. Sekundärbatterie nach Anspruch 6, wobei die Isolierschicht Isolierband umfasst.

8. Sekundärbatterie nach einem der vorhergehenden Ansprüche, wobei die Elektrodenbaugruppe eine Vielzahl von ersten Elektrodenplatten, die mit einem ersten Aktivmaterial beschichtet sind, eine Vielzahl von zweiten Elektrodenplatten, die mit einem zweiten Aktivmaterial beschichtet sind, und einen Separator, der zwischen jeder der ersten Elektrodenplatten und jeder der zweiten Elektrodenplatten positioniert ist, einschließt.

9. Verfahren zum Herstellen einer Sekundärbatterie, umfassend:
Bereitstellen eines Gehäuses (120), in dem eine Elektrodenbaugruppe untergebracht ist, die erste und zweite Elektrodenplatten und Leitfahnen (110, 111), die mit den ersten Elektrodenplatten bzw. den zweiten Elektrodenplatten verbunden sind und zu der Außenseite des Gehäuses (120) vorstehen, umfasst;
Bereitstellen einer Schutzleiterplatte (130), die ein leitfähiges Muster (132) umfasst, das eine leitfähige Zellsitzregion (132b) einschließt, auf der eine der Leitfahnen (110, 111) sitzt;
Entfernen eines Abschnitts des leitfähigen Musters (132) entlang jeder Kante der Zellsitzregion (132b), um eine nicht leitfähige Leerregion (132a) auszubilden, die die Kanten der Zellsitzregion (132b) vollständig umgibt, wobei die Leerregion (132a) die Zellsitzregion (132b) elektrisch von dem leitfähigen Muster (132) isoliert.

10. Verfahren nach Anspruch 9, umfassend Laserschweißen der Leitfahne (110, 111) an die Zellsitzregion (132b).

## Revendications

1. Batterie secondaire comprenant :
un boîtier (120) qui reçoit un ensemble d'électrodes, l'ensemble d'électrodes comprenant des première et seconde plaques d'électrodes ;
des pattes de connexion (110, 111) connectées aux premières plaques d'électrodes et aux secondes plaques d'électrodes, respectivement, et faisant saillie à l'extérieur du boîtier (120) ; et
une carte de circuit de protection (130) connectée électriquement aux pattes de connexion (110, 111),
ladite carte de circuit de protection (130) comprenant un motif conducteur (132) et une zone d'assise de cellule conductrice (132b) sur laquelle l'une des pattes de connexion (110, 111) repose,
ladite zone d'assise de cellule (132b) étant entièrement entourée par une zone vierge non conductrice (132a), ladite zone vierge se trouvant entre la zone d'assise de cellule (132b) et le motif conducteur (132) ;
ladite zone vierge isolant électriquement la zone d'assise de cellule (132b) du motif conducteur (132).

2. Batterie secondaire selon la revendication 1, ladite zone d'assise de cellule (132b) et lesdites pattes de connexion (110, 111) étant soudées au laser.

3. Batterie secondaire selon l'une quelconque des revendications précédentes, ladite zone d'assise de cellule (132b) présentant une largeur de 2,3 mm à 2,5 mm.

4. Batterie secondaire selon l'une quelconque des revendications précédentes, ladite zone d'assise de cellule (132b) présentant une hauteur de 1,8 mm à 2,0 mm.

5. Batterie secondaire selon l'une quelconque des revendications précédentes, ladite zone vierge (132b) présentant une largeur de 0,2 mm à 0,4 mm.

6. Batterie secondaire selon l'une quelconque des revendications précédentes, comprenant en outre une couche d'isolation formée sur une surface supérieure de la zone vierge (132a).

7. Batterie secondaire selon la revendication 6, ladite couche d'isolation comprenant un ruban d'isolation.

8. Batterie secondaire selon l'une quelconque des revendications précédentes, ledit ensemble d'électrodes comprenant une pluralité de premières plaques d'électrodes revêtues d'un premier matériau actif, une pluralité de secondes plaques d'électrodes revêtues d'un second matériau actif, et un séparateur positionné entre chacune des premières plaques d'électrodes et chacune des secondes plaques d'électrodes.

9. Procédé de fabrication d'une batterie secondaire, comprenant :
la fourniture d'un boîtier (120) qui abrite un ensemble d'électrodes qui comprend des première et seconde plaques d'électrodes et des pattes de connexion (110, 111) connectées aux premières plaques d'électrodes et aux secondes plaques d'électrodes, respectivement, et faisant saillie à l'extérieur du boîtier (120) ;
la fourniture d'une carte de circuit de protection (130) qui comprend un motif conducteur (132) comprenant une zone d'assise de cellule conductrice (132b) sur laquelle l'une des pattes de connexion (110, 111) repose ;
le retrait d'une partie du motif conducteur (132) le long de chaque bord de la zone d'assise de cellule (132b) de manière à former une zone vierge non conductrice (132a) entourant entièrement les bords de la zone d'assise de cellule (132b), la zone vierge (132a) isolant électriquement la zone d'assise de cellule (132b) du motif conducteur (132).

10. Procédé selon la revendication 9, comprenant le soudage au laser de la patte de connexion (110, 111) à la zone d'assise de cellule (132b).
